(19) **Europäisches Patentamt**

**European Patent Office**

**Office européen des brevets**

(11) **EP 0 367 654 B2**

(12) **NOUVEAU FASCICULE DE BREVET EUROPEEN**

(45) Date de publication et mention de la décision concernant l'opposition:
**09.09.1998 Bulletin 1998/37**

(51) Int. Cl.$^6$: **C01B 3/38**

(45) Mention de la délivrance du brevet:
**29.01.1992 Bulletin 1992/05**

(21) Numéro de dépôt: **89402906.5**

(22) Date de dépôt: **20.10.1989**

(54) **Procédé pour la production de gaz de synthèse par oxydation partielle d'hydrocarbures légers**

Verfahren zur Erzeugung von Synthesegas durch Partialoxidation von leichten Kohlenwasserstoffen

Process for producing synthesis gas by partial oxidation of light hydrocarbons

(84) Etats contractants désignés:
**DE GB IT NL**

(30) Priorité: **03.11.1988 FR 8814481**

(43) Date de publication de la demande:
**09.05.1990 Bulletin 1990/19**

(73) Titulaire:
**INSTITUT FRANCAIS DU PETROLE**
**92502 Rueil-Malmaison (FR)**

(72) Inventeurs:
• **Dang Vu, Quang**
**F-92200 Neuilly (FR)**
• **Gateau, Paul**
**F-78860 St Nom La Breteche (FR)**
• **Maute, Michel**
**F-78340 Les Clayes Sous Bois (FR)**
• **Meunier, Alain**
**F-94300 Vincennes (FR)**
• **Le Gall, André**
**F-95610 Eragny Sur Oise (FR)**

(74) Mandataire:
**Lewald, Dietrich, Dipl.-Ing. et al**
**Lewald & Partner**
**Patent- und Rechtsanwälte**
**Rindermarkt 6**
**80331 München (DE)**

(56) Documents cités:
**EP-A- 67 491**    **US-A- 2 618 543**
**US-A- 2 655 442**    **US-A- 4 650 651**

• **CHEMICAL ABSTRACTS, vol. 101, no. 14, 1 octobre 1984, page 122, résumé no. 113201p, Columbus, Ohio, US; & PL-B-120 118 (ZAKLADY AZOTOWE "PULAWY") 25-01-1984**
• **MECHANICAL ENGINEERING, vol. 98, no. 3, mars 1976, page 53, A.S.M.E, New York, US; "Hydrogen-rich gas generators to reduce air pollution and improve gas economy"**
• **Ullmanns Encyclopädie der Technischen Chemie, 4. edition, volume 14, pages 419-421**
• **Ullmanns Encyclopädie der Technischen Chemie, vol. 24, 1983, pages 271-272**
• **Chemical Abstracts, vol.83, 1975, 181781n**
• **The Oil and Gas Journal, September 6, 1971, pages 85-90**

Remarques:
Le dossier contient des informations techniques présentées postérieurement au dépôt de la demande et ne figurant pas dans le présent fascicule.

EP 0 367 654 B2

## Description

La présente invention concerne un procédé pour la production de gaz de synthèse par oxydation partielle d'hydrocarbures légers, c'est-à-dire renfermant de 1 à 4 atomes de carbone.

Elle a pour objet de produire de manière économique du gaz de synthèse exempt de suie à la sortie.

On sait, d'après le brevet US n° 3989444, que pour pouvoir brûler sans formation de suie des mélanges d'hydrocarbures, il est nécessaire d'opérer avec une quantité d'oxygène supérieure à un minimum qui est d'environ 62% de la quantité stoechiométrique, lorsqu'on a affaire à du gaz naturel, et d'environ 64%, quand le combustible est du propane par exemple. L'emploi d'une proportion aussi élevée d'oxygène est coûteuse, aussi opère-t-on le plus souvent avec une plus faible proportion d'oxygène et tolère-t-on la formation de suie.

La séparation et la manipulation des suies étant peu pratiques et très onéreuses, le brevet US 4704137 enseigne de les récupérer au moyen d'une trempe à l'eau puis de les réinjecter, en mélange avec la phase liquide où elles se trouvent en suspension, directement dans la flamme du brûleur, en empruntant, à cet effet, le conduit réservé au combustible.

L'inconvénient du procédé de trempe à l'eau provient de la perte quasi totale de la chaleur sensible contenue dans les gaz brûlés à la sortie de la flamme.

Un autre procédé largement utilisé dans l'industrie est le réformage à l'eau des hydrocarbures, couramment effectué en deux étapes de réaction (US 3278452). L'inconvénient de ce procédé est de requérir l'emploi d'une proportion très élevée de vapeur d'eau, ce qui est coûteux, comme souligné dans le brevet US 4296085. Ce dernier brevet propose de remédier à cet inconvénient, et donc de permettre l'emploi d'une quantité limitée de vapeur d'eau, par ajout d'une quantité notable d'hydrogène, au moins 5% molaire calculé sur le gaz sec, au gaz envoyé à la seconde étape de reforming effectuée en présence d'oxygène. Cet ajout d'hydrogène accroit le coût du procédé. Le brevet précité reconnait également l'utilité de mélanger rapidement et efficacement le courant d'hydrocarbure avec le courant d'oxygène ou d'air pour réduire les réactions indésirables de craquage de l'hydrocarbure.

Le brevet US 4582630 représente un perfectionnement en ce sens que la proportion de vapeur d'eau est réduite, mais le procédé requiert une étape intermédiaire de réformage à la vapeur d'eau d'une partie de la charge d'hydrocarbures.

Dans d'autres procédés connus, on introduit séparément l'oxygène ou l'air et la charge d'hydrocarbures (GB-2216573 et EP-212889) de sorte que l'oxygène moléculaire ne réagit qu'avec une partie du combustible, celle qui se trouve dans son environnement immédiat. Là aussi la proportion de vapeur d'eau demeure très élevée pour éviter la formation de suie.

L'objet de l'invention est de proposer un procédé qui opère sans formation notable de suie et à un coût réduit puisque les proportions d'oxygène ou d'air et d'eau peuvent être relativement faibles. Ce procédé évite l'emploi d'une étape préalable de réformage à la vapeur d'eau.

Le procédé de l'invention est un

Procédé de production de gaz de synthèse sans presence notable de suie dans les gaz sortant, procédé dans lequel, dans une première étape, la charge d'hydrocarbures légers est soumise à une oxydation partielle en présence de vapeur d'eau et, dans une seconde étape, les gaz brûlés obtenus sont mis au contact d'un catalyseur à une température de 900 à 1500°C, ledit procédé étant **caractérisé** en ce que, le mélange soumis à l'oxydation partielle dans la première étape dans des conditions où l'on forme 0,01 à 10 g de matière carbonée solide par $Nm^3$ équivalent de la charge d'hydrocarbure, est constitué de la charge, de vapeur d'eau et de gaz contenant de l'oxygène, mélange dans lequel la quantité de vapeur d'eau, introduite dans le brûleur, est inférieure à 1,5 mole par atome-gramme de carbone de la charge et la quantité d'oxygène est au plus égale à 50 % de la proportion stoechiométrique, le temps de séjour des gaz en oxydation partielle étant compris entre 0,1 et 10 s, que le catalyseur utilisé dans la seconde étape renferme au moins un métal ou un composé de métal d'au moins l'un des groupes VI et VIII, que la VVH (volume d'hydrocarbure par volume de catalyseur par heure) corrigée est comprise entre 500 et 5000 $h^{-1}$ et que l'ensemble du procédé opère sous une pression comprise entre 5 et 200 bars.

Par proportion stoechimétrique d'oxygéne, on entend la proportion théorique qui assure la combustion totale de la charge d'hydrocarbures, par exemple 2 moles d'oxygène pour une mole de méthane, transformant cette charge exclusivement en eau et en dioxyde de carbone.

Par $Nm^3$ équivalent, on entend le débit de la charge d'hydrocarbures, compté en mètres cubes dans les conditions normales de température et de pression, multiplié par le nombre d'atomes de carbone moyen par molécule de la charge d'hydrocarbures.

Ainsi, dans le procédé de l'invention, il est inutile d'ajouter de l'hydrogène aux réactifs et l'on obtiendra d'excellents résultats sans hydrogène ou avec des teneurs en hydrogène faibles, inférieures par exemple à 3% molaire, comptées sur gaz sec. Pour régulariser les débits et éviter un retour éventuel de l'oxygène dans le conduit des hydrocarbures il est de bonne pratique d'ajouter de la vapeur d'eau à la charge d'hydrocarbures. De la même façon, pour empêcher l'oxygène de s'accumuler dans les zones mortes, on les balaie avec des dérivations de vapeur d'eau. En tous les cas, la rapport moles de vapeur d'eau par atome-gramme de carbone de la charge doit être inférieur à 1,5.

Dans le procédé de l'invention, le carburant et le combustible sont envoyés à la rencontre l'un de l'autre dans un dispositif de mélange efficace, par exemple un brûleur à canaux multiples.

La pression est comprise entre 0,5 et 20 MPa, de préférence entre 1 et 20 MPa, et la température de la zone catalytique est comprise entre 900 et 1500 degrés centigrades.

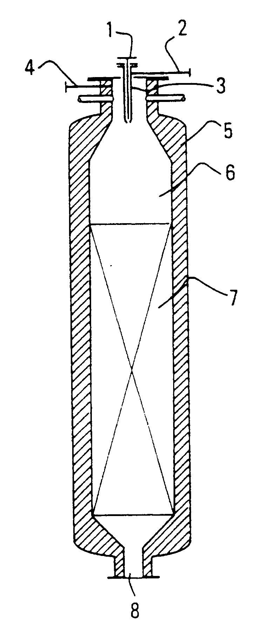

Pour mieux comprendre la description qui suit, on se référera à la figure jointe.

La VVH (volume d'hydrocarbure(s) de la charge/volume de catalyseur/heure) peut être exprimée en VVH corrigée. VVH corrigée = VVH conventionnelle x nombre moyen d'atomes de carbone de la charge.

On opère avec une VVH corrigée de 500 à 5000, de préférence 500 à 2500.

On envoie par les conduits 1 et 2, respectivement du combustible et du comburant, ou inversement, dans le brûleur à canaux concentriques 3, permettant de mélanger les gaz rapidement et efficacement.

Un exemple de brûleur 3 utilisable dans le procédé de l'invention est décrit dans la demande de brevet français n° 26 17 577.

De préférence, on fait passer dans le canal 1 le réactif ayant le plus petit débit.

Ainsi qu'on peut le voir dans les exemples I et II, lorsque le comburant est de l'oxygène pur, ce gaz est de préférence introduit dans le brûleur par le conduit 1.

Le réacteur 5, de forme sensiblement cylindrique et dont la paroi est protégée par du réfractaire, comporte deux volumes intérieurs 6 et 7. Le brûleur 3 est disposé à son sommet.

Le volume 6 est un espace vide où se développe la flamme du brûleur 3. Le volume qui détermine te temps de séjour des gaz brûlés avant le traitement catalytique joue un rôle important dans le procédé. S'il est trop faible, le catalyseur se dés active assez rapidement. S'il est trop important, on constate des dépôts de suie sur la paroi de 6 et à l'entrée de 7.

On opère donc avec un temps de séjour dans la chambre de combustion 6 (avant le lit catalytique) de 0,1 à 10 secondes.

L'enceinte 7 est remplie de catalyseur. Ce catalyseur peut être à base de métal ou de combinaison de métaux du groupe VIII mis en oeuvre soit sous forme massique, soit sous forme de dépôt sur support réfractaire. On peut aussi utiliser des oxydes, par exemple l'oxyde de chrome, seul ou sur support.

Selon une variante préférée, le catalyseur est utilisé sous forme de garnissage, par exemple en anneaux de Raschig, de Pall ou de Berg, de diamètre compris entre 5 et 500 mm, de préférence entre 10 et 200 mm.

Selon une autre variante, le catalyseur est fait d'au moins une toile en fil de platine, de préférence de plusieurs toiles de platine séparées par des lits de garnissage en céramique.

Les gaz de combustion sont évacués par l'ouverture 8.

Exemple 1 (comparatif)

Dans un réacteur conforme à la figure jointe, mais vide de catalyseur, on envoie sur le canal 2 du brûleur 3, 300 Nm³/h d'un gaz naturel dont la composition est la suivante :

|        | % volumes |
|--------|-----------|
| $CO_2$ | 1,8       |
| $CH_4$ | 82,65     |
| $C_2H_6$ | 13,95   |
| $C_3H_8$ | 1,6     |
|        | $\overline{100,00}$ |

On note que l'indice de carbone du gaz est de 1,17 (nombre moyen des atomes de carbone des hydrocarbures de la charge). Par le même canal on injecte 56,5 kg/h d'eau représentant 70,3 Nm³/h de vapeur d'eau correspondant à un taux de vapeur sur carbone de 0,2 (nombre de moles d'eau par atome-gramme de carbone).

Par le canal 1 du même brûleur 3, on amène de l'oxygène à 98% de pureté molaire. Le débit d'oxygène compté pur est de 235 Nm³/h ce qui correspond à un rapport $O_2$/C de 0,67 (nombre de moles d'oxygène par atome-gramme de carbone).

Les conditions opératoires sont les suivantes :

Température du gaz et de la vapeur d'eau à l'entrée : 562°C
Température de l'oxygène à l'entrée : ambiante
Température des gaz brûlés à la sortie : 1350°C
Pression du réacteur à la sortie : 8 MPa

Les gaz sont évacués par l'ouverture 8. Une fraction de ces gaz est refroidie par trempe à l'eau aux fins d'analyse. Ces gaz ont les caractéristiques mesurées suivantes :

| $H_2$ | 60,4 |
|-------|------|
| CO | 36,0 |
| $CO_2$ | 3,3 |
| $CH_4$ | 0,2 |
| Inertes | 0,1 |
|       | $\overline{100,00}$ |

Les suies collectées par les eaux de refroidissement et de lavage de la fraction prélevée pour analyse représentent une production d'environ 70 g à l'heure.

Ce dernier chiffre correspond a une teneur d'environ 80 mg par $m^3$ de gaz sec produit.

<u>Exemple II</u> (invention)

On utilise le même réacteur qu'à l'exemple 1, mais on remplit maintenant le bas de ce réacteur avec 250 l d'un catalyseur au chrome défini comme suit :

| | |
|---|---|
| Elément actif : | chrome |
| Teneur : | 4% en poids |
| Support : | alumine |
| Forme : | anneau |
| Dimensions : | $25 \times 25$ mm |

Dans le brûleur 3, on effectue la même combustion qu'à l'exemple 1, c'est-à-dire :

300 $Nm^3$/h de gaz naturel
56,5 kg/h d'eau
235 $Nm^3$/h d'oxygène

On a pratiquement les mêmes conditions opératoires que précédemment, à savoir :

Température à l'entrée au gaz et de la vapeur : 560°C
Température à l'entrée de l'oxygène : ambiante
Température à la sortie des gaz brûlés : 1347°C
Pression au réacteur : 8 MPa
Débit des gaz brûlés complés secs (eau exclue) : 887 $Nm^3$/h
Composition des gaz brûlés : volumes %

| | |
|---|---|
| $H_2$ : | 60,3 |
| CO : | 36,1 |
| $CO_2$ : | 3,3 |
| $CH_4$ : | 0,2 |
| Inertes : | 0,1 |

L'eau de refroidissement à la sortie du lit de catalyseur est restée claire, exempte de toute trace de suie. On évalue donc la teneur du gaz en suie à moins de 1 mg par $Nm^3$.

La VVH par rapport au débit de gaz naturel utilisé est de 1200 ($Nm^3$/h de gaz par $m^3$ de catalyseur).

La VVH corrigée, produit de la VVH par l'indice de carbone du gaz (dans le cas présent i = 1,17) est égale à 1406.

La VVH par rapport au gaz de synthèse obtenu est de 3560.

## Revendications

1. Procédé de production de gaz de synthèse sans presence notable de suie dans les gaz sortant, procédé dans lequel, dans une première étape, la charge d'hydrocarbures légers est soumise à une oxydation partielle en présence de vapeur d'eau et, dans une seconde étape, les gaz brûlés obtenus sont mis au contact d'un catalyseur à une température de 900 à 1500°C, ledit procédé étant **caractérisé** en ce que, le mélange soumis à l'oxydation partielle dans la première étape dans des conditions où l'on forme 0,01 à 10 g de matière carbonée solide par $Nm^3$ équivalent de la charge d'hydrocarbure, est constitué de la charge, de vapeur d'eau et de gaz contenant de l'oxygène, mélange dans lequel la quantité de vapeur d'eau, introduite dans le brûleur, est inférieure à 1,5 mole par atome-gramme de carbone de la charge et la quantité d'oxygène est au plus égale à 50 % de la proportion stoechiométrique, le temps de séjour des gaz en oxydation partielle étant compris entre 0,1 et 10 s, que le catalyseur utilisé dans la seconde étape renferme au moins un métal ou un composé de métal d'au moins l'un des groupes VI et VIII, que la VVH (volume d'hydrocarbure par volume de catalyseur par heure) corrigée est comprise entre 500 et 5000 $h^{-1}$ et que l'ensemble du procédé opère sous une pression comprise entre 5 et 200 bars.

2. Procédé selon la revendication 1, caractérisé en ce que le catalyseur contient au moins un métal ou composé de métal du groupe VI.

## Claims

1. Process for the production of synthesis gas without notable presence of soot in the discharge gases, process in which in a first stage the charge of light hydrocarbons is subjected to a partial oxidation in the presence of steam and in a second stage the obtained burned gases are brought into contact with a catalyst at a temperature of 900 to 1500°C, process characterized in that the mixture subjected to partial oxidation in the first stage under conditions where 0,01 to 10 g solid carbon containing material per $Nm^3$ equivalent of a hydrocarbon charge is formed, is constituted by the charge, by steam and gas containing oxygen, mixture in which the steam quantity introduced into the burner is lower than 1,5 mole per gramme atom of hydrocarbon of the charge and the quantity of oxygen is at most equal to 50% of the stoichiometric proportion, the retention time of the gases in partial oxidation being comprised in between 0,1 and 10 seconds, that the catalyst used in the second stage comprises at least one metal or metal compound of at least one of the groups VI and VIII, that the corrected VVH (volume hydrocarbon per volume catalyst per hour) is comprised in between 500 and 5000 h$^{-1}$ and that the process in total operates under a pressure comprised in between 5 und 200 bars.

2. Process according to claim 1, characterized in that the catalyst contains at least one metal or metal compound of the group VI.

## Patentansprüche

1. Verfahren zur Erzeugung von Synthesegas ohne nennenswertes Vorhandensein von Ruß in den austretenden Gasen, Verfahren, bei dem in einer ersten Stufe die Charge aus leichten Kohlenwasserstoffen einer Teiloxidation in Anwesenheit von Wasserdampf ausgesetzt wird und in einer zweiten Stufe die erhaltenen verbrannten Gase mit einem Katalysator bei einer Temperatur von 900 bis 1500°C kontaktiert werden, wobei das Verfahren sich dadurch auszeichnet, daß das in der ersten Stufe der Teiloxidation ausgesetzte Gemisch unter Bedingungen, unter denen man 0,01 bis 10g festes kohlenstoffhaltiges Material pro Nm$^3$ äquivalent der Kohlenwasserstoffcharge bildet, aus der Charge, Wasserdampf und Sauerstoff enthaltendem Gas gebildet wird, wobei in diesem Gemisch die Menge an in den Brenner eingeführtem Wasserdampf geringer als 1,5 Mol pro Grammatom Kohlenstoff der Charge und die Menge an Sauerstoff höchstens gleich 50% des stoechiometrischen Anteils ist, die Verweilzeit der Gase in der Teiloxidation zwischen 0,1 und 10 Sekunden beträgt, der in der zweiten Stufe verwendete Katalysator wenigstens ein Metall oder eine Metallverbindung wenigstens einer der Gruppen VI und VIII umfaßt, daß das korrigierte VVH (Volumen Kohlenwasserstoff pro Volumen Katalysator und Stunde) zwischen 500 und 5000 h$^{-1}$ liegt und daß das Verfahren insgesamt unter einem Druck zwischen 5 und 200 Bar abläuft.

2. Verfahren nach Anspruch 1, dadurch gekennzeichnet, daß der Katalysator wenigstens ein Metall oder eine Metallverbindung der Gruppe VI enthält.